# EUROPÄISCHE PATENTSCHRIFT

(11) **EP 2 574 827 B1**
(45) Veröffentlichungstag und Bekanntmachung des Hinweises auf die Patenterteilung: **26.02.2014**
(21) Anmeldenummer: 11183510.4
(22) Anmeldetag: 30.09.2011
(51) Int. Cl.: F16H 57/04

(54) **Kupplungsbaugruppe mit Entölungseinrichtung**
Coupling assembly with oil drainage device
Composant d'embrayage doté d'un dispositif de drainage d'huile

(43) Veröffentlichungstag der Anmeldung: 03.04.2013
(73) Patentinhaber: GKN Driveline Köping AB, 731 36 Köping (SE)
(72) Erfinder: Haupt, Jan, 51515 Kürten (DE); Nett, Hans-Peter, 53518 Adenau (DE)
(74) Vertreter: Tersteegen, Felix

(56) Entgegenhaltungen:
- EP-A1- 2 116 411
- WO-A1-2010/017881
- DE-A1-102007 022 182
- US-A1- 2004 224 809
- US-B1- 6 345 712

## Beschreibung

Die Erfindung betrifft eine Kupplungsbaugruppe eines Kraftfahrzeugs für die Weiterleitung von Antriebsleistung des Kraftfahrzeugs auf ein Rad einer Achse mit einer schaltbaren Kupplungseinrichtung, die Antriebsleistung von einem in Bezug auf die Kupplungsvorrichtung antriebsseitigen Antriebsglied auf eine in Bezug auf die Kupplungsvorrichtung abtriebsseitigen Antriebsglied zu übertragen vermag, wobei eine Ölfördereinrichtung für die Kupplungsbeölung vorgesehen ist, die betriebszustandsabhängig Öl eines die Kupplungsvorrichtung bedienenden Ölkreislaufs fördert, und wobei die Kupplungsvorrichtung in einem Gehäuse gelagert ist, das einen Kupplungsraum zur Aufnahme der Kupplungsvorrichtung ausbildet.

Die Erfindung betrifft insbesondere eine Kupplungsbaugruppe als Teil einer kupplungsgesteuerten Ausgleichseinheit, über die Räder einer Achse wahlweise in den Antriebsleistungsfluss integriert oder von diesem entkoppelt werden können, um das Fahrzeug wahlweise im Allradantrieb bzw. Zweiachsantrieb oder im Zweiradantrieb bzw. Einachsantrieb betreiben zu können.

Eine Kupplungsbaugruppe dieser Art ist aus der EP 2 116 411 A1 bekannt. In einer kupplungsgesteuerten Ausgleichseinheit ist für eine Seitenwelle, die in Bezug auf die Kupplungsvorrichtung ein abtriebsseitiges Antriebsglied bildet, eine Kupplungsbaugruppe mit einer ansteuerbaren Lamellenkupplung vorgesehen, über die die Antriebsleistung dem angeschlossenen Antriebsrad eines Kraftfahrzeugs im Bedarfsfall zugeleitet wird. Der Außenlamellenträger der Lamellenkupplung, der mit dem antriebsseitigen oder mit dem abtriebsseitigen Antriebsglied gekoppelt sein kann, fördert Schmier- bzw. Kühlöl in einen in einem Gehäuse der Kupplungsbaugruppe vorgesehenen Ölfang, von wo das Öl in einen vom Kupplungsraum gebildeten Sumpf zurückfließt, erneut von der Kupplung erfasst wird und dem Kreislauf wieder zugeführt wird. Bezogen auf ein Lamellenpaket einer Seitenwellenkupplung bildet sich also ein innerer Ölkreislauf aus.

Wegen dieses inneren Ölkreislaufs verweilt ein großer Teil des zur Kühlung und Schmierung aufgewendeten Ölvolumens lange in dem beschriebenen inneren Ölkreislauf, ohne dass sich das Ölvolumen ausreichend mit "frischem" Öl vermischt oder durch dieses ersetzt werden würde. Ölvolumen, das gerade erst zwischen den Kupplungslamellen Wärme aufgenommen hat, wird unmittelbar wieder zu den Lamellen zurückgeführt. Die Kupplungstemperatur steigt daher überproportional zu der Kühlleistung, die mit der in der Ausgleichseinheit vorhandenen Ölmenge erreichbar wäre. Die überproportionale Erwärmung der Kupplungen bringt Nachteile hinsichtlich des Verschleißverhaltens und somit der Lebensdauer sowie hinsichtlich des Ansprech- und Regelverhaltens mit sich.

Ein weiterer Nachteil der in der EP 2 116 411 A1 gezeigten Ausführung ist, dass die Kupplungspakete der Seitenwellenkupplungen dauerhaft im Öl stehen, um dieses zu erfassen und zur Ölauffangtasche zu fördern. Die hiermit einhergehenden Planschverluste erhöhen die Verlustleistung des Antriebstrangs.

Hinsichtlich der unerwünschten Verlustleistung kommt hinzu, dass selbst in dem in der EP 2 116 411 A1 beschriebenen Fall, dass der Sekundärteil des Antriebsstrangs von den Antriebsrädern entkoppelt ist und die Seitenwellenkupplungen vollständig geöffnet sind, die Sekundärantriebsräder im Fahrbetrieb auf der Straße abrollen und einen Kupplungslamellenträger und die damit drehfest verbundenen Lamellen schleppen. Die Lamellen stehen jedoch in ständigem Kontakt mit dem Öl, da sie darin eintauchen. Nicht nur der Bereich des äußerst schmalen Luftspalts (Spaltbreite ca. 0,1 mm) zwischen Innen- und Außenlamellen, der sich unmittelbar im Öl befindet, ist mit Öl gefüllt, sondern das Öl wird zudem durch die rotierenden Lamellen auch in den nicht im Öl stehenden Zwischenraum zwischen Innen- und Außenlamellen der Lamellenkupplung gefördert. Die in der Folge erzeugte Flüssigkeitsreibung bzw. hydrodynamische Reibung überträgt wiederum das von den Sekundärantriebsrädern auf die Innenlamellen wirkende Schleppmoment auf die Außenlamellen und treibt diese hierdurch an. Sobald diese aber zu rotieren beginnen, fördern sie ihrerseits wiederum Öl in den zuvor beschriebenen inneren Ölkreislauf und erhöhen somit ihrerseits das geförderte Ölvolumen und damit die Reib- bzw. Verlustleistung erneut. Der unerwünschte Effekt verstärkt sich bis zu einem gewissen Grad selbst.

Versuche haben gezeigt, dass aufgrund dieses Effekts der Sekundärantriebsstrang entgegen der in der EP 2 116 411 A1 gemachten Annahmen auch dann nicht zum Stillstand kommt, wenn er vom Primärteil des Antriebsstrangs entkoppelt ist. Durch die in der EP 2 116 411 A1 vorgeschlagene reibungsarme Ausgestaltung der Oberflächen der Innenlamellen lassen sich die negativen Auswirkungen dieses Effekts nur geringfügig verringern. Außerdem führen reibungsarme Oberflächen der Innenlamellen zu einem deutlich schlechteren Ansprech- und Regelverhalten des Kupplungspakets. Ein Nachteil, der schwerer wiegt als die bei der Verlustleistung durch diese Maßnahme erreichbaren Vorteile.

Kupplungsbaugruppen ähnlicher Art offenbaren auch die Druckschriften W0 2010/017881 A1 und DE 10 2007 022 182 A1, wobei auch hier die Kupplungslamellen dauerhaft in Kontakt mit Schmier- bzw. Kühlöl stehen. Ferner offenbart die Druckschrift US 6,345,712 B1 eine in einem Differentialgehäuse angeordneten Lamellenbremse, deren Versorgung mit Kühlöl durch die in Kontakt mit dem Öl stehenden Bremslamellen sichergestellt ist. Auch hier stehen die Bremslamellen jedoch dauerhaft in Kontakt mit dem Öl.

Vor diesem Hintergrund macht es sich die Erfindung zur Aufgabe, eine Kupplungsbaugruppe der eingangs genannten Art zur Verfügung zu stellen, die zur Vermeidung der vorstehend beschriebenen Nachteile beiträgt. Insbesondere soll das in der EP 2 116 411 A1 beschriebene Beölungskonzept mit dem Ziel der Verlustleistungsminimierung bei einem vom Antriebsleistungsfluss mittels der Kupplungsvorrichtung entkoppelten Sekundärachsantriebsrad optimiert werden.

Diese Aufgabe wird dadurch gelöst, dass eine Entölungseinrichtung vorgesehen ist, die den Kupplungsraum bei nicht fördernder Ölfördereinrichtung entölt.

Die Verwendung einer solchen Entölungseinrichtung hat zur Folge, dass dann, wenn die Kupplung zur Entkopplung eines Antriebsrades vom Antriebsleistungsfluss geöffnet ist und keine Antriebsleistung auf ein Antriebsrad überträgt, Öl durch die Entölungseinrichtung aktiv aus dem Kupplungsraum herausgefördert wird, so dass die Kupplungsvorrichtung zügig trocken laufen kann. Bei einer trockengelaufenen Kupplung kann keine Flüssigkeitsreibung zwischen Innen- und Außenlamellen einer Lamellenkupplung entstehen, so dass die eingangs mit Blick auf den Stand der Technik beschriebenen Probleme umgangen sind.

Bei der Entölung handelt es sich bevorzugt um eine aktive Entölung, also eine durch eine angetriebene Einrichtung aktiv geförderte oder erzwungene Entölung und nicht bloß um ein beispielsweise schwerkraftbedingtes Ablaufen einer Ölmenge.

Bevorzugt ist vorgesehen, dass die Entölungseinrichtung von einem oder mehreren Bauteilen der Kupplungsvorrichtung gebildet ist, insbesondere von den in Bezug auf die Kupplungsvorrichtung antriebsseitigen Antriebsgliedern, die Öl in einen Ölauffang fördern, wenn die Kupplung geöffnet ist, um Sekundärachsantriebsräder vom Antriebsleistungsfluss zu entkoppeln. Dies ermöglicht konstruktiv einfache Lösungen zur schnellen Entölung des Kupplungsraums, bei der nicht auf zusätzliche Entölungspumpen oder Ähnliches zurückgegriffen werden muss. Vorteilhaft ist der Außenlamellenträger der als Lamellenkupplung ausgebildeten Kupplungsvorrichtung als Bestandteil der Entölungseinrichtung vorgesehen.

Bei einem besonderen Anwendungsfall für den Erfindungsgegenstand ist die Kupplungsbaugruppe Bestandteil einer Ausgleichseinheit für den Antriebsstrang eines Kraftfahrzeugs mit einer permanent angetriebenen Primärachse und einer wahlweise zuschaltbaren Sekundärachse, wobei die Kupplungsvorrichtung zur Entkopplung von über die Sekundärachse angetriebenen Sekundärachsantriebsrädern aus dem Antriebsleistungsfluss dient und wobei die Ausgleichseinheit ein formschlüssig wirkendes Differentialgetriebe aufweist, über das die Antriebsleistung auf die Sekundärachsantriebsräder übertragen ist, wenn die Sekundärachse in den Antriebsleistungsfluss integriert ist. Hierbei ist eine erste form- oder reibschlüssige Kupplungsvorrichtung auf der ersten Ausgangsseite des Differentialgetriebes vorgesehen, die mit einem ersten Sekundärachsantriebsrad gekoppelt ist. Auf der zweiten Ausgangsseite des Differentialgetriebes ist entweder keine weitere, zweite Kupplungsvorrichtung vorgesehen, oder es ist eine eine zweite form- oder reibschlüssige Kupplungsvorrichtung vorgesehen. Die zweite Ausgangsseite des Differentialgetriebes ist also entweder unmittelbar - ohne zwischengeschaltete zweite Kupplungsvorrichtung - mit einem zweiten Sekundärachsantriebsrad oder mittelbar - unter Zwischenschaltung einer zweiten Kupplungsvorrichtung - mit einem zweiten Sekundärachsantriebsrad verbunden.

Wird nun die erste Kupplungsvorrichtung auf der ersten Ausgangsseite geöffnet, wird über beide Sekundärachsantriebsräder keine Antriebsleistung mehr übertragen. Das zweite Sekundärachsantriebsrad rollt aber nach wie auf der Straße ab und bei nicht vorhandener zweiter Kupplungsvorrichtung oder bei zwar vorhandener, aber nicht geöffneter zweiter Kupplungsvorrichtung wird dessen Drehbewegung in das Differentialgetriebe übertragen. Aufgrund des typischen Aufbaus eines herkömmlichen Differentials überträgt sich diese Drehbewegung bei stehenden oder lediglich mitgeschleppten eingangsseitigen Antriebsgliedern der Ausgleichseinheit und auch der Kupplungsvorrichtung (z.B. Kardanwelle, Kegelrad, Differentialkorb, Tellerrad) bis in die in Bezug auf die erste Kupplungsvorrichtung antriebsseitigen Antriebsglieder der geöffneten ersten Kupplungsvorrichtung, wobei im Differentialgetriebe selbst eine Drehrichtungsumkehr erfolgt. Da die in Bezug auf die erste Kupplungseinrichtung antriebsseitigen Antriebsglieder aber bevorzugt als Bestandteil der Entölungseinrichtung eingesetzt werden, stellt diese Drehrichtungsumkehr ein Problem dar, denn bei geöffneter erster Kupplungsvorrichtung können die als Bestandteil der Entölungseinrichtung eingesetzten Antriebsglieder kein Öl mehr in einen Ölfang fördern, der ausgelegt ist, das Öl bei entgegengesetzter Drehrichtung, also bei zugeschalteter Sekundärachse, aufzufangen.

Um auch bei der beschriebenen Drehrichtungsumkehr der in Bezug auf eine erste Kupplungsvorrichtung antriebsseitigen Antriebsglieder eine zügige Entölung des Kupplungsraums zu ermöglichen, wenn die Sekundärachse von dem Antriebsleistungsfluss entkoppelt ist und wenn wegen der hierzu geöffneten Kupplungsvorrichtung die Ölfördereinrichtung kein Öl fördert, ist insbesondere in dem den Kupplungsraum ausbildenden Teil des Gehäuses ein erster Ölfang vorgesehen. In diesen Ölfangfördert die Entölungseinrichtung das dem Kupplungsraum zwecks Kupplungsraumentölung entzogene Öl also dann, wenn der Sekundärteil des Antriebsstrangs von dem Antriebsleistungsfluss entkoppelt ist. Somit wird der Kupplungsraum nach Abschaltung des Sekundärteils des Antriebsstrangs und bei infolge dessen still gelegter Ölfördereinrichtung umgehend entölt. Die Kupplungsvorrichtung läuft zügig trocken und die eingangs beschriebenen Nachteile bestehen nicht.

Um bei nicht vom Antriebsleistungsfluss entkoppelten Sekundärteil des Antriebsstrangs, also bei geschlossener oder zumindest Drehmoment übertragender Kupplungsvorrichtung die ausreichende Entölung sicherzustellen, ist bevorzugt vorgesehen, dass das den Kupplungsraum ausbildende Gehäuse einen zweiten Ölauffang aufweist, in den die Entölungseinrichtung das dem Kupplungsraum zwecks Kupplungsraumentölung entzogene Öl fördert, wenn die Sekundärachse in den Antriebsleistungsfluss integriert ist.

Das Öl wird also entweder von dem ersten oder dem zweiten Ölauffang aufgefangen und über eine erste und gegebenenfalls eine zweite Entölungsleitung, in die der jeweilige Ölauffang mündet, in ein bevorzugt entfernt von der Kupplungsvorrichtung angeordnetes Ölreservoir geleitet. Ein Ölreservoir ist dann von der Kupplungsvorrichtung entfernt, wenn deren Antriebsglieder nicht in dem Ölreservoir stehen, und zwar weder bei zugeschaltetem noch bei entkoppeltem Sekundärachsantriebsstrang. Das Ölreservoir kann hierzu entweder durch eine Gehäusewandung oder eine sonstige Schottwand vom Kupplungsraum derart getrennt sein, dass der Kupplungsraum trotz höher liegendem Ölspiegel im Ölreservoir trockenlaufen kann, oder das Ölreservoir ist derart gestaltet, dass dessen Ölspiegel dauerhaft unterhalt der Kupplungsbaugruppe liegen kann.

Die Kupplungsbaugruppe ist bevorzugt als Baugruppe einer differentiallosen oder differentialbehafteten, kupplungsgesteuerten Ausgleichseinheit vorgesehen, die einen Teil eines entkoppelbaren Sekundärteils des Gesamtantriebsstrangs bildet. Wenn die Ölfördereinrichtung an ein in Bezug auf die Kupplungseinrichtung antriebsseitiges Antriebsglied gekoppelt ist, insbesondere an die in Bezug auf die Kupplungsvorrichtung antriebsseitige Kupplungseingangswelle bzw. den antriebsseitigen Lamellenträger, dann führt die Entkopplung des Sekundärteils des Antriebsstrangs, der unter anderem durch das Öffnen der Kupplungsvorrichtung vollzogen wird, zur Unterbrechung der Ölförderung durch die Ölfördereinrichtung.

Die bevorzugte Kopplung der Ölfördereinrichtung an ein in Bezug auf die Kupplungsvorrichtung antriebsseitiges Antriebsglied kann auf verschiedene Weise erfolgen. Entweder ist die Ölfördereinrichtung unmittelbar einem Antriebsglied des Antriebsstrangs angeordnet oder wird von diesem selbst gebildet, wie es zum Beispiel bei der Nutzung eines unmittelbar an der antriebsseitigen Welle oder an einem Differentialkorb angeordneten Ölförderrads der Fall ist. Ein solches Ölförderrad kann beispielsweise von dem Tellerrad gebildet sein, das den Differentialkorb antreibt. Oder die Ölfördereinrichtung wird mittelbar, das heißt unter Zwischenschaltung weiterer Bauteile, die die für die Ölfördereinrichtung erforderliche Antriebsleistung von dem antriebsseitigen Antriebsglied zur Ölfördereinrichtung weiterleiten, angetrieben.

Die Ölfördereinrichtung ist bevorzugt entfernt von der Kupplungsvorrichtung angeordnet und insbesondere nicht unmittelbar von einem Außenlamellenträger einer als Lamellenkupplung ausgebildeten Kupplungsvorrichtung ausgebildet. Die Anordnung des Ölförderrades entfernt von der Kupplungsvorrichtung führt dazu, dass das Öl nach einem Durchlauf durch die zu beölende Kupplungsvorrichtung stets in einen von der Kupplungsvorrichtung oder dem Kupplungsraum entferntes und/oder durch eine Schottwand abgetrenntes Ölreservoir zurückfließen kann, bevor es erneut in den Ölkreislauf eingespeist wird. Damit ist eine ausreichende Durchmischung des gesamten Ölvolumens und in der Folge die Ausnutzung der maximalen Kühlleistung der Gesamtölmenge jederzeit gewährleistet, was wiederum die thermische Belastung der Kupplungsvorrichtungen verringert.

Die genannte Ausgestaltung ermöglicht es außerdem, eine auf der gleichen geometrischen Achse wie die Kupplungsvorrichtung rotierende Ölfördereinrichtung, zum Beispiel das Tellerrad, derart auszubilden, dass diese das Kühl- und Schmieröl aus einem Ölreservoir mit einem unterhalb der Kupplungsvorrichtung liegenden Ölspiegel zu fördern vermag. Die Kupplungsvorrichtung, also insbesondere auch die geschleppten Kupplungskomponenten, können sich so dauerhaft oberhalb des Ölspiegels befinden und die Kupplungsvorrichtung kann zügig trockenlaufen. Selbst von den abrollenden Antriebsrädern permanent geschleppte Komponenten verursachen bei geöffneter Kupplung, also bei abgeschaltetem Sekundärteil, keine Reibungsverluste, insbesondere keine Planschverluste oder Verluste aufgrund hydrodynamischer Reibungseffekte.

Weist die Ölfördereinrichtung ein Ölförderrad auf, das zumindest teilweise von einem auf der antriebsseitigen Welle angeordneten Tellerrad gebildet ist, kann es sein, dass aufgrund der Dimensionierung des Tellerrades das Tellerrad selbst nicht über einen ausreichenden Durchmesser verfügt, auch in einen unterhalb der Kupplungsvorrichtung liegendes Ölreservoir einzutauchen. Dann kann vorgesehen sein, dass das Ölförderrad das auf der antriebsseitigen Welle angeordnete Tellerrad umfasst, wobei das Tellerrad radial nach außen erweitert ist, beispielsweise durch einen Ölförderring. Diese radiale Erweiterung kann als integraler, werkstoffeinstückiger Bestandteil des Tellerrades ausgebildet sein. Aus Gewichts- und Kostengründen und um zu beschleunigende und zu verzögernde Massen gering zu halten, bietet es sich jedoch an, die radiale Erweiterung, insbesondere den Ölförderring, als separates Bauteil aus einem leichteren Material zu fertigen und mit dem Tellerrad zu verbinden.

Die Realisierung des Ölförderrades unter Zuhilfenahme eines im Leistungsfluss stehenden Zahnrads des Ausgleichsgetriebes ist nicht zwingend erforderlich. Es kann auch ein vom Tellerrad separates Ölförderrad vorgesehen sein, das aber bevorzugt auf dergleichen geometrischen Achse wie Kupplungsvorrichtung rotiert.

Als Gegenstand der Erfindung wird auch die Verwendung einer Entölungseinrichtung wie vorstehend und nachstehend beschrieben bei einer Kupplungsbaugruppe angesehen, die Teil einer differentiallosen oder differentialbehafteten kupplungsgesteuerten Ausgleichseinheit bildet, bei der die rotatorische Entkopplung der antriebsseitigen und abtriebsseitigen Welle für den Betrieb mit geöffneter Kupplung erforderlich ist. Mit einer solchen Ausgleichseinheit werden insbesondere Fahrzeuge ausgestattet, die über eine kupplungsgesteuerte, differentiallose Ausgleichseinheit anstelle einer herkömmlichen Ausgleichseinheit verfügen, und/oder solche, bei denen im sogenannten Disconnect-Betrieb ein nur wahlweise in den Antriebsleistungsfluss zuschaltbarer Sekundärteil des Antriebsstrangs für den wahlweisen Betrieb des Fahrzeugs mit Allradantrieb vorgesehen ist.

Bei einer Ausgleichseinheit, deren Bestandteil die Kupplungsbaugruppe bevorzugt ist, kann es sich sowohl um eine Quer- als auch um eine Längsausgleichseinheit handeln. Besonders bevorzugt wird die Erfindung jedoch bei einer Querausgleichseinheit eingesetzt, insbesondere bei einer differentiallosen, rein reibschlüssig wirkenden Querausgleichseinheit, bei der die Seitenwellen der Antriebsräder über Seitenwellenkupplungen in den Antriebsleistungsfluss eingekoppelt werden. Grundsätzlich ist die Erfindung aber auch bei herkömmlichen, formschlüssig wirkenden Längs- und Querdifferentialen einsetzbar, um Kupplungspakete der Differentialsperren zu beölen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1a: eine erste Ausführung einer Querausgleichseinheit eines Antriebsstrangs mit einer Kupplungsbaugruppe im Schnitt,
- Fig. 1b: eine zweite Ausführung einer Querausgleichseinheit eines Antriebsstrangs mit einer Kupplungsbaugruppe, und
- Fig. 2a: die Querausgleichseinheit aus Figur 1a im Schnitt entlang der Schnittlinie IIa - IIa
- Fig. 2b: die Querausgleichseinheit aus Figur 1b im Schnitt entlang der Schnittlinie IIb - IIb
- Fig. 3a: die Querausgleichseinheit aus Figur 1a entlang des Schnitts IIIa - IIIa, und
- Fig. 3b: die Querausgleichseinheit aus Figur 1b entlang des Schnitts IIIb - IIIb,

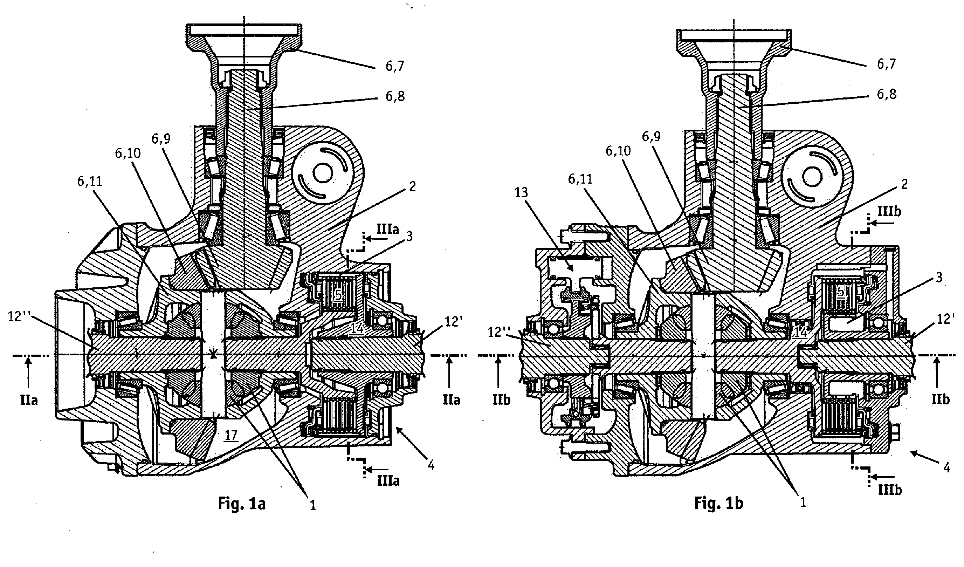

In Figur 1a und Figur 1b ist eine Querausgleichseinheit eines Antriebsstrangs gezeigt, deren Grundaufbau grundsätzlich aus dem Stand der Technik bekannt ist. Sie weist auf einer Seite eines Differentialgetriebes 1, in den Figuren beispielhaft auf der rechten Seite des Differentialgetriebes 1, eine in einem von einem Gehäuse 2 gebildeten Kupplungsraum 3 angeordnete Kupplungsbaugruppe 4 auf. Teil der Kupplungsbaugruppe 4 ist eine Lamellenkupplung 5. Die Antriebsleistung wird über eine Kette von Eingangsgliedern 6 der Ausgleichseinheit (gezeigt sind unter anderem Kardanwellenflansch 7, Kegelradwelle 8 mit Kegelrad 9, Tellerrad 10, Differentialkorb 11) in das Differentialgetriebe 1 geleitet. Von dort aus wird die Antriebsleistung in grundsätzlich bekannter Weise über die Kupplungsbaugruppe auf die Seitenwellen 12' und 12" übertragen.

Die Ausgleichseinheit ist Teil eines Sekundärteils eines Antriebsstrangs mit permanent angetriebenen Primärteil und einem nur im Bedarfsfall angetriebenen Sekundärteil. Zu diesem Zweck ist der Sekundärteil des Antriebsstrangs über Entkopplungseinrichtungen vom Antriebsleistungsfluss abkoppelbar, wenn das Fahrzeug nicht im Allradmodus, sondern lediglich über die Primärachse (nicht gezeigt) angetrieben werden soll. Die Anzahl der Komponenten des Sekundärteils des Antriebsstrangs, die trotz der Stillegung des Sekundärteils mitdrehen, etwa weil sie von den auf der Straße abrollenden Rädern oder von der Primärachsseite her auch bei nicht in den Antriebsleistungsfluss integrierten Sekundärachsantriebsstrang verlustleistungsbehaftet geschleppt werden, soll so gering wie möglich gehalten werden.

Zwecks Entkopplung des Sekundärteils wird die in den Figuren beispielhaft als Lamellenkupplung 5 dargestellte Kupplungsvorrichtung geöffnet, so dass die damit in verbundene Seitenwelle 12' aus dem Antriebsleistungsfluss herausgenommen wird. Wegen des zwischengeschalteten Differentialgetriebes 1, das wegen der geöffneten Kupplung 5 kein Drehmoment mehr überträgt, wird auch keine Antriebsleistung mehr über die gegenüberliegende Seitenwelle 12" übertragen. Außerdem werden die Eingangsglieder 6 der Ausgleichseinheit über eine Bremsvorrichtung (nicht gezeigt) abgebremst, so dass auch die Kette der Eingangsglieder 6 der Ausgleichseinheit stillstehen. Um die Eingangsglieder abbremsen zu können, ist - bevorzugt an der Primärachsseite - eine Power-Take-Off Unit PTU (jeweils nicht gezeigt) vorgesehen, die die Eingangsglieder der Ausgleichseinheit von der Primärachsseite entkoppelt. Ergebnis dieser Entkopplung des Sekundärteils des Gesamtantriebsstrangs ist dessen weitgehende Stilllegung.

Die vorstehenden Erläuterungen gelten für die in Figur 1a und die in Figur 1b dargestellten Ausgleichseinheiten gleichermaßen. Der Unterschied der in den beiden Figuren dargestellten Ausgleichseinheiten liegt in der Ausgleichseinheitenseite, die der Kupplungsvorrichtung 5 gegenüberliegt. Bei der in Figur 1a dargestellten Ausgleichseinheit ist die Seitenwelle 12" fest mit einem Antriebsrad gekoppelt, so dass sich bei Öffnung der Kupplungsvorrichtung 5 die Seitenwelle 12" durch das auf der Straße abrollende Rad nach wie vor und dauerhaft mit dreht. Diese Drehung wird während des Fahrbetriebs dauerhaft in das Differentialgetriebe 1 übertragen, so dass sich dessen Zahnräder ebenfalls dauerhaft mitdrehen. Bei der in Figur 1b gezeigten Ausgleichseinheit ist auf der der Kupplungsvorrichtung 5 gegenüberliegenden Seite eine zusätzliche Entkopplungseinrichtung 13 vorgesehen (hier beispielhaft gebildet durch eine formschlüssig wirkende, hydraulisch betätigte Klauenkupplung), mittels der auch das Differentialgetriebe 5 entkoppelt werden kann, so dass auch dieses bei entkoppeltem Sekundärteil des Antriebsstrangs vollkommen stillgelegt werden kann.

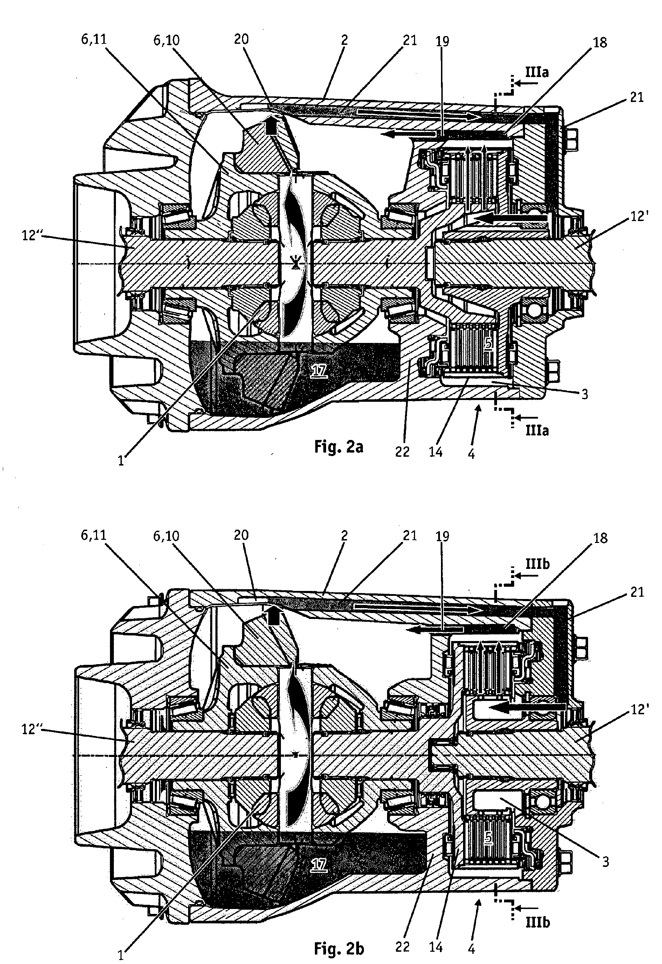

Diese zusätzlich vorgesehene Entkopplungseinrichtung 13 für die Seitenwelle 12" hat für den allgemeinen Erfindungsgedanken keine wesentliche Bedeutung, was weiter unten noch erläutert werden wird. Bei der in Figur 2b dargestellten Schnittansicht IIb - IIb wird daher auf die Darstellung der Entkopplungseinrichtung verzichtet.

Versuche mit den aus dem Stand der Technik bekannten Ausgleichseinheiten haben außerdem gezeigt, dass selbst dann, wenn der Sekundärteil des Antriebsstrangs vom Primärteil entkoppelt ist, insbesondere wenn dieser während der Fahrt und bei einer Geschwindigkeit ab ca. 50 km/h entkoppelt wird, die Antriebsglieder des Sekundärteils, also die in Bezug auf die Kupplungsvorrichtung antriebsseitigen Antriebsglieder, nicht wunschgemäß stillstehen, sondern durch die von den Sekundärantriebsrädern in die Kupplungsvorrichtung eingebrachte Schleppleistung weiterrotieren und somit Verlustleistung verursachen. Dies liegt, wie eingangs beschrieben, insbesondere an dem im Stand der Technik gewählten Beölungskonzept. Die weiteren Figuren zeigen weitere Merkmale des Aufbaus der in Figur 1a und Figur 1b gezeigten Ausgleichseinheiten, die insbesondere durch eine effiziente Kupplungsraumentölung zur Ausräumung dieser Nachteile beitragen.

Für die Erfindung von Bedeutung ist insbesondere bei der in Figur 1b gezeigten Ausführung, bei der das in Bezug auf die Kupplungsvorrichtung 5 antriebsseitige Antriebsglied von dem Außenlamellenträger gebildet ist, dass sich bei Abschaltung bzw. Entkopplung des Sekundärteils des Antriebsstrangs, insbesondere also bei Öffnung der Kupplungsvorrichtung 5, die Drehrichtung der in Bezug auf die Kupplungsvorrichtung antriebsseitigen Antriebsglieder umkehrt. Denn durch das zwischengeschaltete Differentialgetriebe 1 und durch die Tatsache, dass das an der linken Seitenwelle 12" angeordnete Sekundärachsantriebsrad seine Drehbewegung auf die Seitenwelle 12" und in das Differentialgetriebe 1 überträgt, dreht zum Beispiel der Außenlamellenträger 14 gegenüber der Drehrichtung, die er bei geschlossener Kupplungsvorrichtung 5 bei regulärer Vorwärtsfahrt des Fahrzeugs hätte, in umgekehrter Drehrichtung. Je nachdem ob die Kupplung 5 geöffnet und der Sekundärteil des Antriebsstrangs vom Antriebsleistungsfluss und dem Primärteil entkoppelt ist oder ob die Kupplung 5 geschlossen und der Sekundärteil des Antriebsstrangs in Antriebsleistungsfluss eingebunden ist, dreht sich der in Bezug auf die Kupplungsvorrichtung antriebsseitige Außentamellenträger in unterschiedlichen Drehrichtungen. In der Folge würde ein Ölfang, wie er in der eingangs genannten EP 2 116 411 A1 gezeigt ist, kein Öl mehr auffangen können, da dieser nur für das Auffangen von Öl bei der Drehrichtung ausgebildet ist, die sich ergibt, wenn der Sekundärteil des Antriebsstrangs aufgrund der geschlossenen Kupplung in den Antriebsleistungsfluss integriert ist.

Figur 2a und Figur 2b veranschaulichen die Funktion der Ölfördereinrichtung zur Kupplungsbeölung und die der Kupplungsraumentölung. Beiden Ausgestaltungen, die den Betrieb bei geschlossener Kupplungsvorrichtung 5 und damit bei in den Antriebsleistungsfluss integriertem Sekundärteil des Antriebsstrangs zeigen, ist gemeinsam, dass eine Ölfördereinrichtung Öl in eine Ölauffangtasche 20 fördert, die im Differentialgehäuse vorgesehen ist. Der Ölfluss ist durch die Pfeile gekennzeichnet. Das Tellerrad 10 schaufelt das Öl bei zugeschalteter Sekundärachse aufgrund seiner Rotation an der Gehäuseinnenwandung entlang zu einer im Gehäuse 2 vorgesehenen Ölauffangtasche 18. Über einen Ölzuführungskanal 21 gelangt das Öl über ein offenes Drehlager in den Kupplungsraum 3 und über in dem Innenlamellenträger vorgesehene Radialbohrungen zur Kupplungseinrichtung 5 bzw. zu den Kupplungslamellen.

Es ist zu erkennen, dass das Ölreservoir 17, dargestellt durch den grau hinterlegten Raum im Gehäuse 2, von dem Kupplungsraum 3 durch eine Schottwand 22 getrennt ist, so dass trotz eines Ölspiegels, der höher liegt als die Kupplungsglieder, der Kupplungsraum 3 entölt werden kann.

Durch die Nutzung des Tellerrads 10 als Ölfördereinrichtung ist gegenüber einer Lösung, bei der Antriebsglieder der Kupplungsvorrichtung 5, insbesondere ein Lamellenträger und die Lamellen selbst, das Öl überwiegend selbst fördern, ermöglicht, dass das von einer Kupplungsvorrichtung zurückfließende Öl sich - bevor es erneut dem Ölkreislauf zugeführt wird - in einem vom Kupplungsraum entfernt angeordneten Ölreservoir sammeln kann und sich so mit dem gesamten übrigen Ölvolumen vermischen kann. Es wird verhindert, dass sich ein innerer Ölkreislauf ausbildet, aufgrund dessen das Öl, nachdem es durch die Kupplungen hindurch geflossen ist, diesem wieder unmittelbar zuführt wird, so dass sich das Öl in der Folge überproportional erwärmen würde.

Wenn auf die in den Figuren dargestellte Schottwand 22 verzichtet werden soll, kann das Differentialgehäuse 2 so gestaltet sein, dass der Ölspiegel im Ölreservoir sowohl bei zugeschaltetem als auch bei entkoppeltem Sekundärteil des Antriebsstrangs unterhalb der Kupplungsvorrichtung liegt, da diese nicht zur Ölförderung in das Ölreservoir eintauchen muss. Auch dies trägt zur Verlustleistungsminimierung bei, denn die von den Seitenwellen geschleppten Kupplungsglieder müssen nicht im Öl stehen und können somit kein Öl zwischen die Kupplungslamellen fördern. In dem Fall, dass der Sekundärteil des Antriebstrangs vom Primärteil entkoppelt ist, können die Kupplungen also auch bei einem derart gestalteten Differentialgehäuse vollständig trocken laufen und somit reibungsminimiert rotieren.

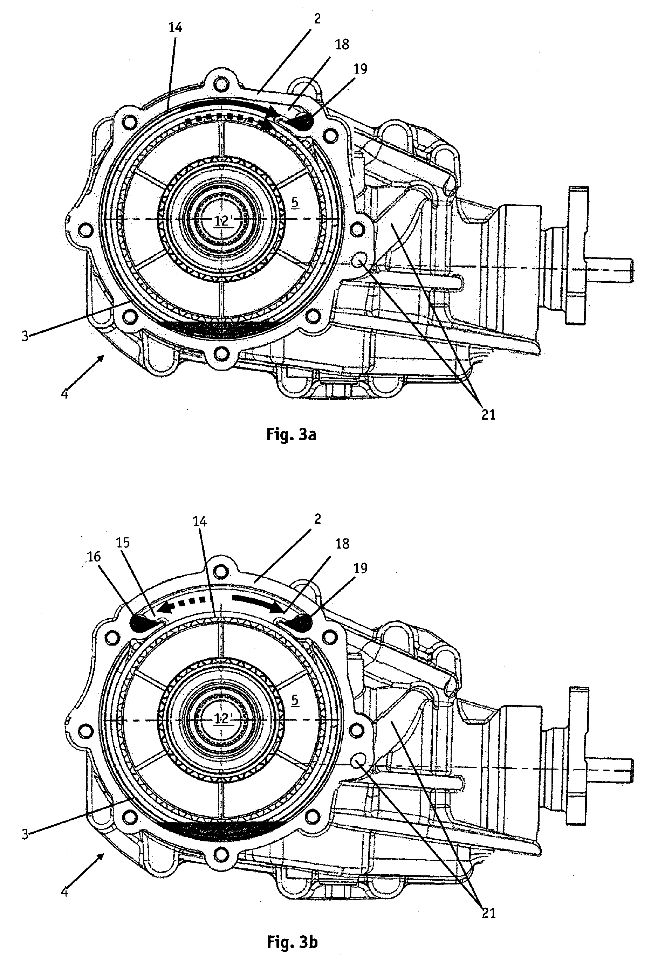

Um die eingangs genannten Probleme der unzureichenden Kupplungsraumentölung und des unzureichenden Trockenlaufens zu lösen, sieht die Erfindung die in Figur 3a und Figur 3b dargestellten Lösungen vor.

Insbesondere für den zuvor zu Figur 1b und Figur 2b beschriebenen Fall, dass der Außenlamellenträger ein in Bezug auf die Kupplungsvorrichtung antriebsseitiges Antriebsglied bildet, wird neben einem zweiten Ölfang 18, der das Öl bei zugeschalteter Sekundärachse und damit bei Öl fördernder Ölfördereinrichtung aufnimmt und über eine zweite Entölungsleitung 19 in ein entfernt von der Kupplungsbaugruppe und dem Kupplungsraum vorgesehenes Ölreservoir 17 fördert, ein zur Aufnahme des von dem Außenlamellenträger 14 abgeschleuderten Öls bestimmter zusätzlicher, erster Ölfang 15 vorgesehen, der so ausgebildet, dass er das vom Außenlamellenträger 14 abgeschleuderte Öl aufnehmen kann, wenn sich die Drehrichtung der in Bezug auf die Kupplungsvorrichtung 5 antriebsseitigen Antriebsglieder infolge des Öffnens der Kupplungsvorrichtung 5 umgekehrt. Das in diesem Fall abgeschleuderte Öl wird über eine erste Entölungsleitung 16 dem Ölreservoir 17 zugeführt. Da bei geöffneter Kupplungsvorrichtung 5 und bei stillgelegtem Antriebsstrang das vorzugsweise als Ölfördereinrichtung dienende Tellerrad 10 ebenfalls still steht und somit die Ölfördereinrichtung kein Öl fördert, dass in den Kupplungsraum nachlaufen könnte, wird der Kupplungsraum 3 zügig entölt.

In Figur 3b und Figur 3a ist die Drehrichtung des Außenlamellenträgers 14 bei geschlossener Kupplung 5 (Sekundärteil des Antriebsstrangs zugeschaltet) mit einem durchgezogenen Pfeil gekennzeichnet. Die Drehrichtung des Außenlamellenträgers bei geöffneter Kupplung 5 (Sekundärteil des Antriebsstrangs entkoppelt), ist als gestrichelter Pfeil dargestellt.

Für die zuvor erläuterte Ausgestaltung einer Ausgleichseinheit gemäß Figur 1a und Figur 2a ist von Bedeutung, dass der Außenlamellenträger 14, der bevorzugt zur Entölung des Kupplungsraums 3 eingesetzt wird, anders als in Figuren 1b, 2b und 3b ein in Bezug auf die Kupplungseinrichtung 5 abtriebsseitiges Antriebsglied darstellt, also radseitig und nicht wie in Figuren 1b, 2b und 3b differentialseitig bzw. in Bezug auf die Kupplung 5 antriebsseitig angeordnet ist. Der Außenlamellenträger rotiert daher bei Vorwärtsfahrt des Kraftfahrzeugs mit, da er dauerhaft vom auf der Straße abrollenden Sekundärantriebsrad geschleppt wird, unabhängig davon, ob die Kupplung 5 geöffnet oder geschlossen ist. Wird die Kupplung 5 zur Entkopplung des Sekundärteils des Antriebsstrangs geöffnet, wird der Kupplungsraum zügig durch den dauerhaft mitdrehenden Außenlamellenträger 14, der noch vorhandenes Öl in den zweiten Ölfang fördert, entölt und läuft zügig trocken. In diesem Fall ist neben dem zweiten Ölfang 18 ein erster Ölfang, der Öl bei umgekehrter Drehrichtung aufzufangen vermag, nicht notwendiger Weise vorgesehen.

Die bei der Ausgestaltung einer Ausgleichseinheit nach Figur 1b zusätzlich vorgesehene Entkopplungseinrichtung 13 hat auf die Entölung des Kupplungsraums nur mittelbar Einfluss. Um diese Entölung auch bei der in Figur 1b gezeigten Ausgleichseinheit realisieren zu können, bei der auch das Differentialgetriebe 1 und die damit verbundenen in Bezug auf die Kupplungsvorrichtung 5 antriebsseitigen Antriebsglieder einschließlich des Außenlamellenträgers 14 still stehen, wenn die zusätzliche Entkopplungseinrichtung 13 geöffnet wird, wird die Öffnung der zusätzlichen Entkopplungsvorrichtung 13 beim Entkoppeln des Sekundärachsantriebsstrangs der Öffnung der Kupplungsvorrichtung 5 zeitlich nachgelagert, so dass sich die Drehrichtung der in Bezug auf die Kupplungsvorrichtung 5 antriebsseitigen Antriebsglieder einschließlich des Außenlamellenträgers 14 zumindest so lange umkehrt, bis eine ausreichende Kupplungsraumentölung erzielt wurde.

### Bezugszeichenliste

- 1: Differentialgetriebe
- 2: Differentialgehäuse
- 3: Kupplungsraum
- 4: Kupplungsbaugruppe
- 5: Kupplungsvorrichtung, Lamellenkupplung
- 6: Eingangsglieder Differentialgetriebe
- 7: Kardanwellenflansch
- 8: Kegelradwelle
- 9: Kegelrad
- 10: Tellerrad
- 11: Differentialkorb
- 12: Seitenwellen
- 13: zusätzliche Entkopplungseinrichtung
- 14: Außenlamellenträger
- 15: erster Ölfang
- 16: erste Entölungsleitung
- 17: Ölreservoir
- 18: zweiter Ölfang
- 19: zweite Entölungsleitung
- 20: Ölauffangtasche
- 21: Ölzuführungskanal
- 22: Schottwand

## Patentansprüche

1. Kupplungsbaugruppe eines Kraftfahrzeugs für die Weiterleitung von Antriebsleistung des Kraftfahrzeugs auf ein Rad einer Achse, insbesondere kupplungsgesteuerte Ausgleichseinheit, mit einer schaltbaren Kupplungsvorrichtung (5), die Antriebsleistung von einem in Bezug auf die Kupplungsvorrichtung (5) antriebsseitigen Antriebsglied auf eine in Bezug auf die Kupplungsvorrichtung abtriebsseitigen Antriebsglied zu übertragen vermag, wobei eine Ölfördereinrichtung für die Kupplungsbeölung vorgesehen ist, die betriebszustandsabhängig Öl eines die Kupplungsvorrichtung (5) bedienenden Ölkreislaufs fördert, wobei die Kupplungsbaugruppe (4) in einem Gehäuse (2) gelagert ist, das einen Kupplungsraum (3) zur Aufnahme der Kupplungsvorrichtung (5) ausbildet, **dadurch gekennzeichnet, dass** eine Entölungseinrichtung vorgesehen ist, die den Kupplungsraum (3) bei nicht fördernder Ölfördereinrichtung entölt.

2. Kupplungsbaugruppe nach Anspruch 1, **dadurch gekennzeichnet, dass** ein oder mehrere Bauteile der Kupplungsvorrichtung (5) als Teil der Entölungseinrichtung wirken.

3. Kupplungsbaugrupp nach Anspruch 2, **dadurch gekennzeichnet, dass** ein Lamellenträger (14) der als Lamellenkupplung ausgebildeten Kupplungsvorrichtung (5) als Bestandteil der Entölungseinrichtung fungiert.

4. Kupplungsbaugruppe nach einem der Ansprüche 1 bis 3, **dadurch gekennzeichnet, dass** in Bezug auf die Kupplungsvorrichtung (5) antriebsseitige Antriebsglieder zur Entölung des Kupplungsraums Öl in einen Ölauffang (15, 18) fördern, wenn die Kupplungsvorrichtung (5) zur Entkopplung eines Rads vom Antriebsleistungsfluss geöffnet ist.

5. Kupplungsbaugruppe nach einem der vorhergehenden Ansprüche, **dadurch gekennzeichnet, dass** ein erster Ölfang (15) vorgesehen ist, in den die Entölungseinrichtung das dem Kupplungsraum (3) zwecks Kupplungsraumentölung entzogene Öl bei nicht Öl fördernder Ölfördereinrichtung fördert.

6. Kupplungsbaugruppe nach dem vorhergehenden Anspruch, **dadurch gekennzeichnet, dass** ein zweiter Ölauffang (18) vorgesehen ist, in den die Entölungseinrichtung das dem Kupplungsraum (3) zwecks Kupplungsraumentölung entzogene Öl bei Öl fördernder Ölfördereinrichtung fördert.

7. Kupplungsbaugruppe nach einem der beiden vorhergehenden Ansprüche, **dadurch gekennzeichnet, dass** das Öl von einem Ölauffang (15, 18) über eine Entölungsleitung (16, 19), in die der Ölauffang (15, 18) mündet, in ein entfernt von der Kupplungsvorrichtung (5) angeordnetes Ölreservoir (17) geleitet ist.

8. Kupplungsbaugruppe nach einem der vorhergehenden Ansprüche, **dadurch gekennzeichnet, dass** die Ölfördereinrichtung von einem in Bezug auf die Kupplungsvorrichtung (5) antriebsseitigen Antriebsglied gebildet ist, das entfernt von der Kupplungsvorrichtung (5) angeordnet ist.

9. Kupplungsbaugruppe nach dem vorhergehenden Anspruch, **dadurch gekennzeichnet, dass** das die Ölfördereinrichtung bildende Antriebsglied ein Ölförderrad ist, insbesondere ein in den Antriebsleistungsfluss integriertes Zahnrad, wobei das Ölförderrad Öl aus einem Ölreservoir (17) mit einem unterhalb der Kupplungsvorrichtung (5) liegenden Ölspiegel oder aus einem Ölreservoir (17), dass durch eine Schottwand vom Kupplungsraum (3) getrennt ist, zu fördern vermag.

10. Kupplungsbaugruppe nach dem vorhergehenden Anspruch, **dadurch gekennzeichnet, dass** das die Ölfördereinrichtung bildende Antriebsglied ein Tellerrad (10) einer Ausgleichseinheit ist.

11. Ausgleichseinheit für einen Antriebsstrang eines Kraftfahrzeugs, der eine permanent angetriebene Primärachse und einer wahlweise zuschaltbare Sekundärachse aufweist, wobei die Ausgleichseinheit eine Kupplungsbaugruppe (4) nach einem der vorhergehenden Ansprüche aufweist, deren Kupplungsvorrichtung (5) zur Entkopplung von über die Sekundärachse angetriebenen Sekundärachsantriebsrädern aus dem Antriebsleistungsfluss dient, und wobei die Ausgleichseinheit ein formschlüssig wirkendes Differentialgetriebe (1) aufweist, über das die Antriebsleistung auf die Sekundärachsantriebsräder übertragen ist, wenn die Sekundärachse in den Antriebsleistungsfluss integriert ist.

## Claims

1. A clutch assembly of a motor vehicle for transmitting drive power of the motor vehicle to a wheel of an axle, in particular a clutch-controlled equalisation unit, having a clutch device (5), which can be engaged and disengaged and can transmit drive power from a drive member which is on the drive side in relation to the clutch device (5) to a drive member which is on the output side in relation to the clutch device, wherein an oil-delivering device is provided to oil the clutch, which oil-delivering device delivers oil of an oil circuit serving the clutch device (5) depending on the operating state, wherein the clutch assembly (4) is mounted in a housing (2) which forms a clutch space (3) for accommodating the clutch device (5), **characterised in that** a de-oiling device is provided, which de-oils the clutch space (3) when the oil-delivering device does not deliver.

2. The clutch assembly according to Claim 1, **characterised in that** one or a plurality of components of the clutch device (5) act as part of the de-oiling device.

3. The clutch assembly according to Claim 2, **characterised in that** a disc carrier (14) of the clutch device (5), which is formed as a multiple disc clutch, functions as a component of the de-oiling device.

4. The clutch assembly according to any one of Claims 1 to 3, **characterised in that** drive members which are on the drive side in relation to the clutch device (5) deliver oil into an oil pan (15, 18) to de-oil the clutch space when the clutch device (5) is opened to decouple a wheel from the flow of drive power.

5. The clutch assembly according to any one of the preceding claims, **characterised in that** a first oil pan (15) is provided, into which the de-oiling device delivers the oil withdrawn from the clutch space (3) in order to de-oil the clutch space when the oil-delivering device does not deliver oil.

6. The clutch assembly according to the preceding claim, **characterised in that** a second oil pan (18) is provided, into which the de-oiling device delivers the oil withdrawn from the clutch space (3) in order to de-oil the clutch space when the oil-delivering device delivers oil.

7. The clutch assembly according to any one of the two preceding claims, **characterised in that** the oil from an oil pan (15, 18) is conducted via a de-oiling line (16, 19), into which the oil pan (15, 18) opens, into an oil reservoir (17), which is arranged at a distance from the clutch device (5).

8. The clutch assembly according to any one of the preceding claims, **characterised in that** the oil-delivering device is formed by a drive member which is on the drive side in relation to the clutch device (5) and is arranged at a distance from the clutch device (5).

9. The clutch assembly according to the preceding claim, **characterised in that** the drive member forming the oil-delivering device is an oil-delivering wheel, in particular a gear wheel integrated in the flow of drive power, wherein the oil-delivering wheel can deliver oil from an oil reservoir (17) having an oil level lying below the clutch device (5) or from an oil reservoir (17) which is separated from the clutch space (3) by a partition.

10. The clutch assembly according to the preceding claim, **characterised in that** the drive member forming the oil-delivering device is a crown wheel (10) of an equalisation unit.

11. An equalisation unit for a drive train of a motor vehicle, which has a continuously driven primary axle and a secondary axle which can be optionally engaged, wherein the equalisation unit has a clutch assembly (4) according to any one of the preceding claims, the clutch device (5) of which is used to decouple secondary axle drive wheels driven by the secondary axle from the flow of drive power, and wherein the equalisation unit has a differential gear (1), which acts in a form-fitting manner and via which the drive power is transmitted to the secondary axle drive wheels when the secondary axle is integrated in the flow of drive power.

## Revendications

1. Module d'accouplement d'un véhicule automobile en vue de la transmission d'une puissance d'entraînement du véhicule sur une roue d'un axe, notamment une unité de compensation commandée par accouplement, comportant un dispositif d'accouplement commutable (5), qui peut transmettre la puissance d'entraînement d'un organe d'entraînement du côté d'entraînement par rapport au dispositif d'accouplement (5) sur un organe d'entraînement du côté de sortie par rapport au dispositif d'accouplement, dans lequel un dispositif de transport d'huile à des fins d'huilage de l'accouplement est prévu, qui transporte l'huile en fonction d'états de fonctionnement d'un circuit d'huile desservant le dispositif d'accouplement (5), dans lequel le module d'accouplement (4) est positionné dans un logement (2), qui réalise un espace d'accouplement (3) pour recevoir le dispositif d'accouplement (5), **caractérisé en ce que** un dispositif de déshuilage est prévu, qui déshuile l'espace d'accouplement (3) lorsque le dispositif de transport d'huile n'effectue pas de transport.

2. Module d'accouplement selon la revendication 1, **caractérisé en ce que** un ou plusieurs composants du dispositif d'accouplement (5) agissent comme partie du dispositif de déshuilage.

3. Module d'accouplement selon la revendication 2, **caractérisé en ce que** un support à lamelles (14) du dispositif d'accouplement (5) conçu comme un accouplement à lamelles fonctionne comme partie intégrante du dispositif de déshuilage.

4. Module d'accouplement selon une des revendications 1 à 3, **caractérisé en ce que** les organes d'entraînement du côté d'entraînement par rapport au dispositif d'accouplement (5) transportent l'huile dans un dispositif de captage d'huile (15,18) à des fins de déshuilage de l'espace d'accouplement, quand le dispositif d'accouplement (5) est ouvert afin de désaccoupler une roue du flux de puissance d'entraînement.

5. Module d'accouplement selon une des revendications précédentes, **caractérisé en ce que** un premier dispositif de captage d'huile (15) est prévu, dans lequel le dispositif de déshuilage transporte l'huile extraite de l'espace d'accouplement (3) en vue du déshuilage de l'espace d'accouplement lorsque le dispositif de transport d'huile ne transporte pas d'huile.

6. Module d'accouplement selon la revendication précédente, **caractérisé en ce que** un deuxième dispositif de captage d'huile (18) est prévu, dans lequel le dispositif de déshuilage transporte l'huile extraite de l'espace d'accouplement (3) à des fins de déshuilage d'espace d'accouplement lorsque le dispositif de transport d'huile transporte de l'huile.

7. Module d'accouplement selon une des deux revendications précédentes, caractérisé e ce que l'huile est guidée à partir d'un dispositif de captage d'huile (15,18) en passant par une conduite de déshuilage (16,19), dans laquelle le dispositif de captage d'huile (15,18) débouche, dans un réservoir d'huile (17) disposé à distance du dispositif d'accouplement (5).

8. Module d'accouplement selon une des revendications précédentes, **caractérisé en ce que** le dispositif de transport d'huile est formé par un organe d'entraînement du côté d'entraînement par rapport au dispositif d'accouplement (5), qui est disposé à distance du dispositif d'accouplement (5).

9. Module d'accouplement selon la revendication précédente, **caractérisé en ce que** l'organe d'entrainement formant le dispositif de transport d'huile est une roue de transport d'huile, notamment une roue dentée intégrée dans le flux de puissance d'entraînement, dans lequel la roue de transport d'huile peut transporter l'huile à partir d'un réservoir d'huile (17) avec un niveau d'huile situé au-dessous du dispositif d'accouplement (5) ou à partir d'un réservoir d'huile (17), qui est séparé par une paroi de l'espace d'accouplement (3).

10. Module d'accouplement selon la revendication précédente, **caractérisé en ce que** l'organe d'entraînement formant le dispositif de transport d'huile est une couronne (10) d'une unité de compensation.

11. Unité de compensation pour une chaine cinématique d'un véhicule automobile, qui présente un axe primaire entraîné de manière permanente et un axe secondaire commutable au choix, dans laquelle l'unité de compensation présente un module d'accouplement (4) selon une des revendications précédentes, dont le dispositif d'accouplement (5) sert à désaccoupler du flux de puissance d'entraînement es roues d'entraînement secondaires entraînées par l'intermédiaire de l'axe secondaire, et dans laquelle l'unité de compensation présente une transmission à différentiel (1) agissant par conjonction de forme, par l'intermédiaire de laquelle la puissance d'entraînement est transmise aux roues d'entraînement secondaires, quand l'axe secondaire est intégré dans le flux de puissance d'entraînement.
